(19) **Europäisches Patentamt / European Patent Office / Office européen des brevets**

(11) **EP 4 428 394 B1**

(12) **EUROPÄISCHE PATENTSCHRIFT**

(45) Veröffentlichungstag und Bekanntmachung des Hinweises auf die Patenterteilung:
**13.08.2025 Patentblatt 2025/33**

(51) Internationale Patentklassifikation (IPC):
***F16H 47/02*** *(2006.01)* ***F16H 61/444*** *(2010.01)*

(52) Gemeinsame Patentklassifikation (CPC):
**F16H 47/02; F16H 61/444;** B60Y 2200/222; F16H 59/44; F16H 59/46; F16H 59/48; F16H 61/4157; F16H 2047/025

(21) Anmeldenummer: **24160754.8**

(22) Anmeldetag: **01.03.2024**

(54) **VERFAHREN ZUR ANSTEUERUNG EINES HYDROSTATISCHEN ANTRIEBS**

METHOD FOR ACTUATING A HYDROSTATIC DRIVE

PROCÉDÉ DE COMMANDE D'UN ENTRAÎNEMENT HYDROSTATIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **06.03.2023 DE 102023201967**

(43) Veröffentlichungstag der Anmeldung:
**11.09.2024 Patentblatt 2024/37**

(73) Patentinhaber: **Robert Bosch GmbH**
**70442 Stuttgart (DE)**

(72) Erfinder:
• **Mueller, Matthias**
**89129 Langenau (DE)**
• **Barrera Villalpando, Abraham**
**89091 Lehr Ulm (DE)**
• **Werner, Franz**
**89129 Langenau (DE)**
• **Brix, Norman**
**89340 Leipheim (DE)**
• **Herrmann, Ronny**
**89129 Langenau (DE)**
• **Isfort, Ole**
**89312 Guenzburg (DE)**
• **Klee, Hannes**
**89233 Neu-Ulm (DE)**
• **Ilk, Erich**
**86169 Augsburg (DE)**
• **Vogel, Dieter**
**89160 Dornstadt (DE)**
• **Arcolia, Alessandro**
**15121 Alessandria (IT)**
• **Alberti, Andrea**
**89077 Ulm (DE)**

(56) Entgegenhaltungen:
**EP-A1- 3 009 716 EP-A1- 3 623 666**

**Beschreibung**

TECHNISCHER BEREICH

Die Erfindung betrifft ein Verfahren zur Ansteuerung eines hydrostatischen Fahrantriebs einer mobilen Arbeitsmaschine. Darüber hinaus betrifft diese Erfindung eine Steuereinheit, eine Arbeitsmaschine, die die Steuereinheit umfasst und ein Computerprogramm.

STAND DER TECHNIK

Es sind hydrostatische Fahrantriebe für mobile Arbeitsmaschinen bekannt, bei denen eine Hydropumpe und ein oder mehrere Hydromotoren in einem geschlossenen hydraulischen Kreis miteinander verbunden sind. Die Hydropumpe wird von einem Verbrennungsmotor - z.B. einem Dieselmotor - angetrieben, und die Hydromotoren treiben schließlich die mobile Arbeitsmaschine - z.B. über ein jeweiliges Rad - an.

Die Hydropumpe und die Hydromotoren derartiger Fahrantriebe sind oft in ihrem Fördervolumen verstellbar. Damit kann z. B. bei konstanter Drehzahl des Verbrennungsmotors der von der Hydropumpe geförderte Volumenstrom im geschlossenen Kreis verändert werden und damit eine Abtriebsdrehzahl der Hydromotoren bzw. der Räder - also eine Fahrgeschwindigkeit der mobilen Arbeitsmaschine - verstellt werden.

Hydrostatische Fahrantriebe haben sehr viele Anwendungen, z.B. in der Landwirtschaft, wo die Arbeitsmaschine neben der Fahrfunktion auch eine Arbeitsfunktion ausführen soll. Der Feldhäcksler ist ein Beispiel davon. Der Feldhäcksler ist ein landwirtschaftliches Gerät zur Aufnahme, Zerkleinerung und Verladung von Erntegut wie Gras, Luzerne oder Mais, insbesondere bei der Zubereitung von Silage bzw. Ganzpflanzensilage.

Um den Übersetzungsbereich eines Fahrantriebs zu vergrößern, sind beispielsweise hydrostatische Getriebe mit mindestens zwei fluidisch parallel betriebenen Hydromotoren bekannt (als 2+1 Getriebe bezeichnet). Deren Triebwellenleistung kann über ein Summierungsgetriebe des hydrostatischen Getriebes addiert und beispielsweise an eine Fahrzeugachse übertragen werden. So sind beispielsweise bei geringer Fahrgeschwindigkeit beide Hydromotoren parallel in Betrieb und erlauben damit eine hohe Zugkraft. Bei vorgegebener Fördermenge der Hydropumpe und vor dem Hintergrund, dass die Verringerung der Schluckvolumina der Hydromotoren einen abnehmenden Wirkungsgrad mit sich bringt, ist die mit zwei Motoren erreichbare Fahrgeschwindigkeit begrenzt.

Zum Erreichen eines Fahrbereiches höherer Fahrgeschwindigkeit kann daher einer der Hydromotoren auf Verdrängungsvolumen null verstellt und vom Abtrieb mittels einer Kupplung getrennt werden. Somit wird der vollständige Volumenstrom der Hydropumpe über den verbleibenden, meist kleineren Hydromotor geleitet, was höhere Drehzahlen und somit höhere Fahrgeschwindigkeiten ermöglicht.

Das bedeutet, dass bei hohen Zugkraftanforderungen im niedrigeren Geschwindigkeitsbereich ein zweiter Hydromotor zugeschaltet wird. Bei höheren Geschwindigkeiten und niedrigeren Zugkraftanforderungen ist der zweite Motor abgeschaltet (d.h. er ist zu Null geschwenkt und durch eine Kupplung vom Abtrieb getrennt). Das Zu- und Abschalten der Kupplung und damit des Motors erfolgt durch eine automatisierte Strategie.

Bekannte Strategien zum Zu- und Abschalten basieren in der Regel auf fahrpedalabhängigen Schaltgeschwindigkeiten. Damit lassen sich einfache "Use Cases" bei Straßenfahrt abbilden. Typischerweise werden solche Fahrantriebe in Baumaschinen wie Radladern und Telehandlern genutzt, die neben dem reinen Fahren auch für anspruchsvolle "Use Cases" (z.B. Ladeoperationen, Reversieren, Inching, Stehenbleiben am Hang) eingesetzt werden.

Zusätzlich hat das 2+1 Getriebe die Eigenschaft, dass das Zuschalten des temporären Motors bei hohen Geschwindigkeiten Synchronisationsmoment erfordert und deshalb spürbar und hörbar ist. Bisherige Strategien sorgen nicht dafür, dass das Zuschalten nur wenn es notwendig ist und bei möglichst niedrigen Drehzahlen erfolgt.

Das Patentdokument EP 3 009 716 D1 ist aus dem Stand der Technik bekannt.

Dem gegenüber liegt der Erfindung die Aufgabe zu Grunde, ein Verfahren zu entwickeln, bei dem die Zuschaltung nur durchgeführt wird, wenn sie tatsächlich notwendig zum Erreichen der geforderten Zugkraft ist, sodass Schaltungen bei hohen Differenzdrehzahlen so weit wie möglich vermieden werden.

KURZFASSUNG

Gemäß einer Ausführungsform der vorliegenden Erfindung wird ein Verfahren zur Ansteuerung eines hydrostatischen Fahrantriebes (1) einer mobilen Arbeitsmaschine bereitgestellt, wobei der hydrostatische Fahrantrieb mit einer ersten Hydromaschine (4) mit verstellbarem Verdrängungsvolumen und mit einer zweiten Hydromaschine (6) und einer dritten Hydromaschine (8) mit jeweils verstellbaren Verdrängungsvolumen versehen ist, wobei die erste Hydromaschine mit einer Antriebsmaschine koppelbar oder gekoppelt ist, wobei das von der ersten Hydromaschine kommende Druckmittel an die zweite und an die dritte Hydromaschine (6, 8), die parallel zueinander angeordnet sind, gefördert werden kann, wobei die zweite und die dritte Hydromaschine (6, 8) mit mindestens einem anzutreibenden Rad oder einer anzutreibenden Kette oder Achse verbindbar oder verbunden sind, wobei die zweite Hydromaschine (6) mit dem mindestens einen anzutreibenden Rad oder der anzutreibenden Kette oder Achse mittels einer Kupplung (38) drehverbindbar ist, wobei die dritte Hydromaschine (8) mit dem mindestens einen anzutreibenden Rad oder der anzutreibenden Kette oder Achse drehverbunden ist, wobei die Kupplung in Abhängigkeit einer Fahrgeschwindigkeit der mobilen Arbeitsmaschine gesteuert wird, **dadurch gekennzeichnet, dass** das Verfahren folgende Schritte umfasst:

a. Erfassen eines Fahrbefehls, der einer Soll-Fahrgeschwindigkeit oder einer Größe, die von dieser abhängig ist, entspricht;

b. Berechnung eines Schwellenwertes der Fahrgeschwindigkeit der Arbeitsmaschine, bei dem eine Umschaltung der Kupplung (38) stattfinden soll, wobei die Berechnung unter Berücksichtigung des im Schritt a. erfassten Fahrbefehls ausgeführt wird;

c. Wobei für den Fall, dass der Fahrbefehl einem Absolutwert der Soll-Fahrgeschwindigkeit der Arbeitsmaschine entspricht, der kleiner als ein vorgegebener Wert ist, der im Schritt b. berechnete Schwellenwert weiterhin unter Berücksichtigung einer aktuellen Verzögerung der Arbeitsmaschine und einer Umschaltzeit angepasst wird.

Da die erste, die zweite und die dritte Hydromaschine theoretisch sowohl als Hydromotor als auch als Hydropumpe benutzt werden können, werden sie in den Ansprüchen generisch als Hydromaschine bezeichnet. Darüber hinaus wird aus dem genannten Grund in den Ansprüchen immer von einem Volumenstrom gesprochen (und nicht spezifisch z.B. als Schluckvolumen von einem Hydromotor bezeichnet).

KURZE BESCHREIBUNG DER FIGUREN

Die vorliegende Erfindung wird unter Bezugnahme auf die beigefügten Figuren beschrieben, wobei sich gleiche Bezugszeichen auf gleiche Teile und / oder auf ähnliche Teile und / oder auf entsprechende Teile des Systems beziehen. Zu den Figuren:

Fig. 1 zeigt einen hydraulischen Schaltplan eines hydrostatischen Fahrantriebes gemäß dem Stand der Technik,

Fig. 2 zeigt ein Verfahren zur Ermittlung eines Schwellenwertes für die Umschaltung eines 2+1 Getriebe unter Berücksichtigung eines Inchbefehls gemäß einer Ausführungsform der vorliegenden Erfindung;

Fig. 3 zeigt ein Verfahren für die Anpassung des Schwellenwertes gemäß einer Ausführungsform der vorliegenden Erfindung;

Fig. 4 zeigt ein Verfahren für die Anpassung des Schwellenwertes gemäß einer weiteren Ausführungsform der vorliegenden Erfindung.

DETAILLIERTE BESCHREIBUNG

Im Folgenden wird die vorliegende Erfindung unter Bezugnahme auf bestimmte Ausführungsformen beschrieben, wie sie in den beigefügten Figuren gezeigt sind. Nichtsdestotrotz ist die vorliegende Erfindung nicht auf die besonderen Ausführungsformen beschränkt, die in der folgenden detaillierten Beschreibung beschrieben und in den Figuren gezeigt sind, sondern die beschriebenen Ausführungsformen veranschaulichen lediglich einige Aspekte der vorliegenden Erfindung, deren Schutzbereich durch die Ansprüche definiert ist.

Weitere Änderungen und Variationen der vorliegenden Erfindung sind für den Fachmann klar. Die vorliegende Beschreibung umfasst somit alle Änderungen und / oder Variationen der vorliegenden Erfindung, deren Schutzbereich durch die Ansprüche definiert ist.

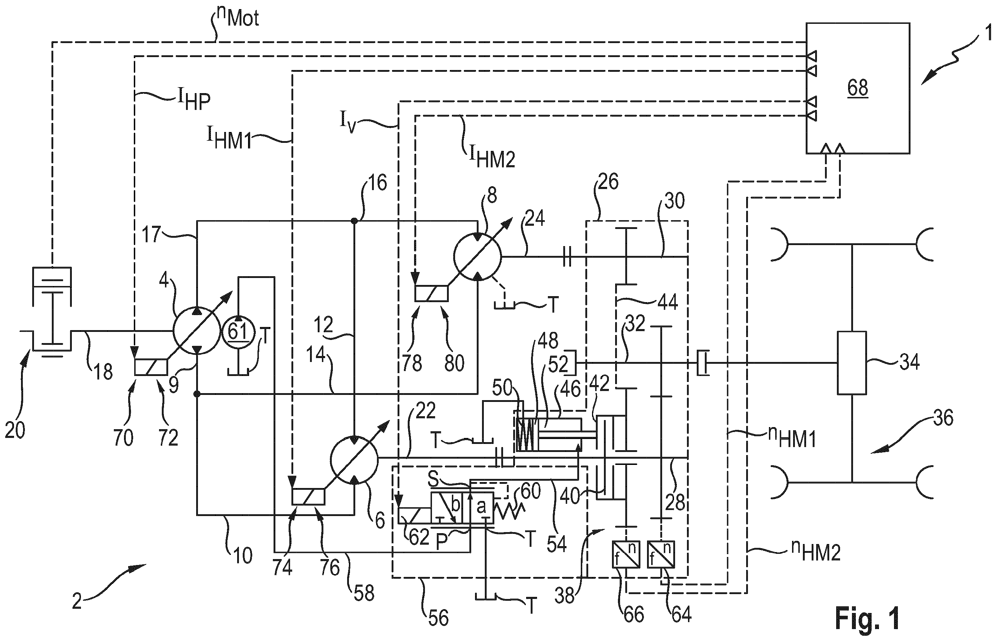

Gemäß Figur 1 hat ein Fahrantrieb 1 ein hydrostatisches Getriebe 2 mit einer im Zugbetrieb des Fahrantriebs 1 als Hydropumpe arbeitenden Hydromaschine 4 und zwei im genannten Zugbetrieb als Hydromotoren arbeitende Hydromaschinen 6 und 8. Der Fahrantrieb wird bei einer Arbeitsmaschine benutzt (wie Radlader, Telehendler usw.). Beide Hydromotoren 6, 8 sind mit der Hydropumpe 4 über Arbeitsleitungen 10 und 12 einerseits und 14 und 16 andererseits fluidisch parallel in einem geschlossenen hydraulischen Kreis verbunden. Die Hydromaschinen 4, 6, 8 sind in ihrem Verdrängungsvolumen verstellbar, wobei sie jeweils als Axialkolbenmaschine in Schrägscheibenbauweise oder in Schrägachsenbauweise ausgebildet sind. In der Regel ist der maximale Volumenstrom (Schluckvolumen) des ersten Hydromotors 6 deutlich größer als der von dem zweiten Hydromotor 6. Das Verhältnis zwischen den maximalen Volumenströmen der zwei Hydromotoren ist zwischen 1.5 bis 2.5.

Es wird darauf hingewiesen, dass auch wenn sowohl die zweite und als auch die dritte Hydromaschine 6, 8 mit verstellbaren Verdrängungsvolumen in Figur 1 dargestellt wurden, diese Erfindung auch benutzt werden kann, wenn die zweite und/oder die dritte Hydromaschine mit konstanten Verdrängungsvolumen versehen ist.

Die Hydropumpe 4 ist über ihre Triebwelle 18 mit einer als Dieselmotor ausgestalteten Antriebsmaschine 20 verbunden. Ein erster Hydromotor 6 der beiden Hydromotoren 6, 8 hat eine erste Triebwelle 22 und der zweite Hydromotor 8 hat eine zweite Triebwelle 24. Dem hydrostatischen Getriebe 2 ist als mechanisches Getriebe ein Summationsgetriebe 26 mit zwei Eingangswellen 28 und 30 nachgeschaltet. Die erste Eingangswelle 28 ist dabei drehfest mit der ersten Triebwelle 22 und die zweite Eingangswelle 30 drehfest mit der zweiten Triebwelle 24 verbunden. Eine Ausgangswelle 32 des Summationsgetriebes 26 ist drehfest mit einem Differential 34 einer Antriebsachse 36 verbunden.

Das Summationsgetriebe 26 umfasst eine als Lamellenkupplung ausgebildete Kupplung 38. Diese hat einen ersten Kupplungsabschnitt 40, der drehfest mit der ersten Eingangswelle 28 verbunden ist. Zudem hat sie einen zweiten Kupplungsabschnitt 42, der über eine, rein schematisch dargestellte, Zahnradanordnung 44 mit der zweiten Eingangswelle 30 des Summationsgetriebes 26 drehfest verbunden ist. Durch Betätigung der Kupplung 38, das mit einem Einrücken des zweiten Kupplungsabschnittes 42 einhergeht, sind die beiden Eingangswellen 28 und 30 und damit die beiden Triebwellen 22 und 24 drehfest miteinander verbindbar.

Zur Betätigung der Kupplung 38 ist ein als Hydrozylinder ausgestaltetes Betätigungselement 46 vorgesehen. Dessen Kolben 48 ist über eine Kolbenstange zug- und schubfest mit dem zweiten Kupplungsabschnitt 42 gekoppelt. Der Hydrozylinder 46 hat einen Kolbenraum, in dem eine Druckfeder 50 angeordnet ist. Der Kolbenraum ist dabei permanent über eine Tankleitung mit einem Tank T verbunden. Kolbenstangenseitig weist der Hydrozylinder 46 einen Ringraum 52 auf, der über eine Steuerdruckleitung 54 mit einem Anschluss S eines als Druckregelventil ausgestaltetes Regelgerätes 56 verbunden ist. Letztgenanntes hat einen Druckanschluss P, der über eine Druckleitung 58 mit einer Speisepumpe 61 verbunden ist, die zusammen mit der Hydropumpe 4 von der Triebwelle 18 angetrieben wird. Die Speisepumpe 61 saugt dabei aus dem Tank T Druckmittel an. Des Weiteren hat das Druckregelventil 56 einen Tankanschluss T, der mit dem Tank T verbunden ist.

Das Druckregelventil 56 ist stetig verstellbar und hat zwei Endstellungen a, b. In einer ersten Endstellung a, in der der Ventilkörper über eine Feder 60 vorbelastet ist, ist der Druckanschluss P mit dem Steuerdruckanschluss S verbunden und der Anschluss T ist gegen den Anschluss S abgesperrt. In einer zweiten Endstellung b ist das Druckregelventil 56, genauer gesagt dessen Ventilkörper, über einen Elektromagnet 62 betätigbar. Bei dessen Bestromung, und sofern die zweite Einstellung b vollständig eingenommen wird, ist der Steuerdruckanschluss S mit dem Tankanschluss T verbunden und der Druckanschluss P ist abgesperrt. In der ersten Endstellung a findet somit ausschließlich eine Beschickung oder Befüllung des Ringraumes 52 mit Druckmittel statt, wohingegen in der zweiten Endstellung b ausschließlich eine Entleerung oder Abfuhr von Druckmittel aus dem Ringraum 52 erfolgt. Zwischen den beiden Endstellungen a und b sind Regelstellungen des Ventilkörpers möglich, in denen die Anschlüsse P, S und T in jeweiliger Druckmittelverbindung zueinander stehen. Zur Rückführung des am Steuerdruckanschluss S anstehenden, zu regelnden Steuerdruckes im Ringraum 52, ist der Ringraum 52 über eine Steuerleitung oder einen Steuerkanal fluidisch mit einer Steuerfläche des Ventilkörpers des Druckregelventils 56, die gleichwirkend mit der Feder 60 ist, verbunden.

Das mechanische Getriebe 26 weist weiterhin eine erste Drehzahlerfassungseinheit 64 auf, über die die Drehzahl der ersten Eingangswelle 28 und damit des ersten Kupplungsabschnitts 40 und der ersten Triebwelle 22 erfassbar ist. Über eine zweite Drehzahlerfassungseinheit 66 des mechanischen Getriebes 26 ist die Drehzahl des zweiten Kupplungsabschnittes 42 und damit mittelbar, in Kenntnis der Übersetzung der Zahnradanordnung 44, die Drehzahl der zweiten Eingangswelle 30 und der zweiten Triebwelle 24 erfassbar.

Der Hydropumpe 4 ist ein Regelgerät 70 zugeordnet, das mit einer Verstelleinrichtung 72 zur Verstellung des Verdrängungsvolumens der Hydropumpe 4 zusammenwirkt. Der erste Hydromotor 6 und der zweite Hydromotor 8 haben ein Regelgerät 74 bzw. 78 und eine Verstelleinrichtung 76 bzw. 80.

Die Antriebsmaschine 20, die Regelgeräte 70, 74 und 78, der Elektromagnet 62 sowie die Drehzahlerfassungseinheiten 64, 66 sind jeweils über eine Signalleitung mit der Steuereinrichtung 68 verbunden.

In den folgenden Abschnitten wird ein Verfahren zur Steuerung der zwei Hydromotoren und der Kupplung 38, gemäß einer Ausführungsform der vorliegenden Erfindung beschrieben.

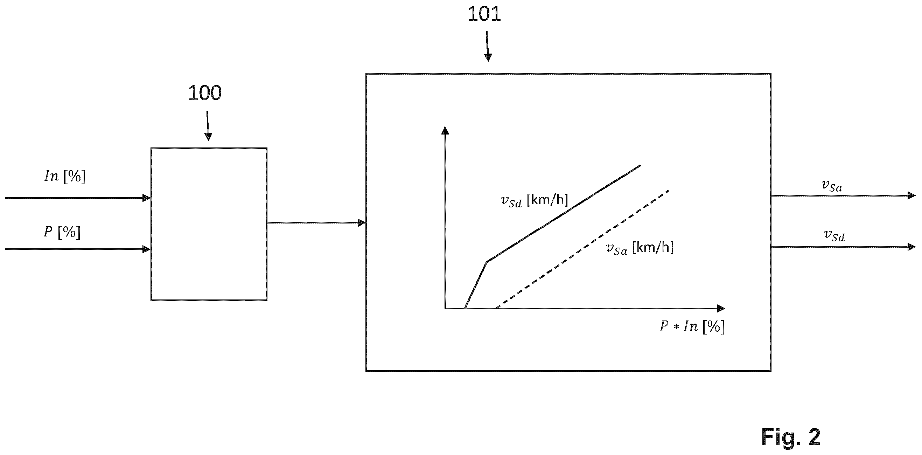

In einem ersten Schritt wird ein Fahrbefehl P, der einer Soll-Fahrgeschwindigkeit oder einer Größe, die von dieser abhängig ist, entspricht, erfasst. Insbesondere kann der Fahrbefehl mit einer Eingabeeinrichtung, vorzugswese ein Fahrpedal, von einem Fahrer der Arbeitsmaschine vorgegeben werden und mit einem Sensor erfasst werden. In einer alternativen Ausführungsform kann die Eingabeeinrichtung ein Joystick oder ein Hebel sein. Das Signal, das durch die Eingabeeinrichtung eingegeben wird, wird vorzugsweise als Verhältnis zwischen einem durch den Fahrer eingegebenen Wert und dem maximalen Wert, der die Eingabeeinrichtung erfassen kann, sein. In so einem Fall wird daher der Fahrbefehl P in Prozent erfasst, wie in Figur 2 dargestellt ist.

Vorteilhaft wird darüber hinaus ein Inchbefehl In, vorzugsweise aus einem Inchpedal, erfasst. Mit dem Inchpedal wird bei hydrostatischen Antrieben eine Trennung des Fahrantriebs von Förder- und Hebeantrieben erreicht. Dieses Pedal sorgt dafür, dass langsame Rangierfahrten (z. B. bei Gabelstaplern oder Radladern) bei gleichzeitig hoher Ladekraft möglich sind. Das Inchpedal dient deswegen dem gefühlvollen Beschleunigen und Abbremsen von Arbeitsmaschinen mit hydrostatischem Antrieb. Ohne Inchfunktion würde die sich erhöhende Motordrehzahl beim Heben von Lasten automatisch zu einer Beschleunigung des Fahrzeuges führen. Das Betätigen des Inchpedals entkoppelt Arbeits- und Antriebsleistung voneinander und ermöglicht dadurch feinfühliges Rangieren. Es gibt kombinierte Inch-Bremspedale. Beim Betätigen eines solchen Pedals wird zuerst die Inchfunktion aktiviert. Wird das Pedal tiefer gedrückt, aktiviert sich die Bremsfunktion des Fahrzeugantriebs. Alternativ werden Inchpedale benutzt, die exklusiv für die Inchfunktion betätigt werden können. Aus diesem Grund wird in dieser Erfindung von einem Inchbefehl gesprochen, da nicht relevant ist, wie der Inchbefehl eingegeben wird (ob durch das Bremspedal oder das Inchpedal).

Figur 2 zeigt ein Beispiel bei dem der Inchbefehl erfasst wird. Es ist dem Fachmann klar, dass diese Erfindung auch ohne die Erfassung des Inchbefehls funktionieren kann. Für den Fall, dass der Inchbefehl erfasst wird, wird in einem ersten Schritt 100 der Inchbefehl In mit dem Fahrbefehl P multipliziert, um einen Fahrbefehl zu erhalten, der den Inchbefehl In berücksichtigt.

In einem weiteren Schritt 101 wird ein Schwellenwert der Fahrgeschwindigkeit der Arbeitsmaschine berechnet, bei dem eine Umschaltung der Kupplung 38 stattfinden soll, wobei die Berechnung unter Berücksichtigung des erfassten Fahrbefehls ausgeführt wird. Für den Fall, dass der Inchbefehl erfasst wurde, wird der im Schritt 100 berechnete Fahrbefehl berücksichtigt.

Die Berechnung wird auf Basis von einer Funktion, vorzugsweise einer Kennlinie, ausgeführt, die den Schwellenwert in Abhängigkeit des Fahrbefehls bestimmt. Für höhere Fahrbefehle wird die Umschaltung, wie in Figur 2 dargestellt ist, bei höheren Fahrgeschwindigkeiten stattfinden, da mehr Drehmoment angefordert wird. Umgekehrt, wird bei niedrigen Fahrbefehlen die Umschaltung bei niedrigen Geschwindigkeiten stattfinden können. In Figur 2 sind zwei Linien dargestellt, von der zwei verschiedene Schwellenwerte ermittelt werden können. Die kontinuierliche Linie bezieht sich auf den Fall, dass die Kupplung 38 geschlossen ist, und wird einen ersten Schwellenwert $v_{sd}$ liefern. Das bedeutet, dass für den Fall, dass die Fahrgeschwindigkeit bei geschlossener Kupplung oberhalb des Schwellenwerts $v_{sd}$ steigt, ein Signal an die Kupplung geschickt wird, um die Kupplung zu öffnen (Schwellenwert-Deaktivierung).

Dagegen bezieht sich die gestrichelte Linie auf den Fall, dass die Kupplung 38 offen ist, und wird einen zweiten Schwellenwert $v_{sa}$ liefern. Das bedeutet, dass für den Fall, dass die Fahrgeschwindigkeit bei offener Kupplung unterhalb des Schwellenwerts $v_{sa}$ sinkt, ein Signal an die Kupplung geschickt wird, um die Kupplung zu schließen (Schwellenwert Aktivierung).

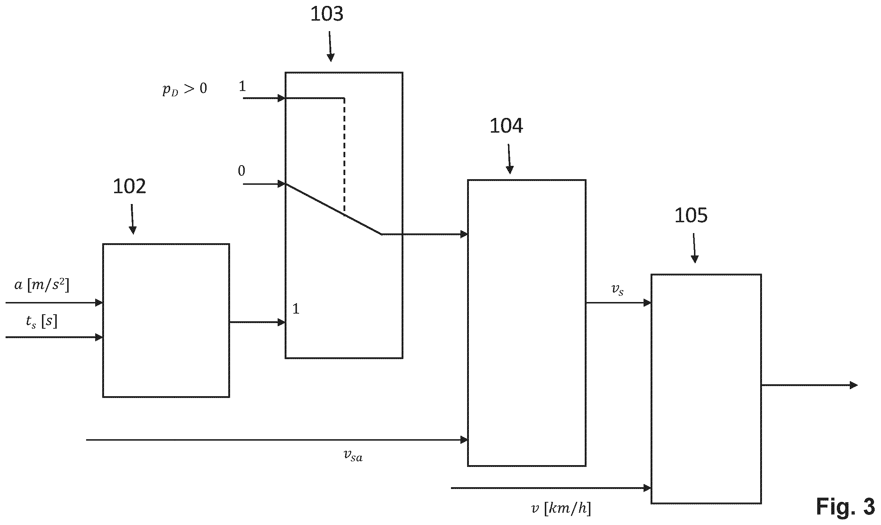

Figur 3 beschreibt die Möglichkeit, den im Schritt 101 berechneten Schwellwert $v_{sa}$ anzupassen, für den Fall, dass der Fahrbefehl einem Absolutwert der Soll-Fahrgeschwindigkeit der Arbeitsmaschine entspricht, der kleiner als ein vorgegebener Wert ist. Der Grund dafür ist, dass bei einem niedrigen Fahrbefehl (Fahrpedal bei 0% oder vergleichbare Werte) gewünscht sein kann, dass beim Stillstand zugeschaltet wird, sodass bei niedrigen Differenzdrehzahlen geschaltet werden kann. Der vorgegebene Wert entspricht vorzugsweise einer Geschwindigkeit der Arbeitsmaschine, die kleiner als 5 km/h ist, noch mehr vorzugsweise kleiner als 3 km/h ist, noch mehr vorzugsweise kleiner als 1 km/h ist, noch mehr vorzugsweise kleiner als 0.5 km/h ist, noch mehr vorzugsweise gleich 0 km/h ist.

Um dieses Ziel zu erreichen, wird in einem Schritt 102 die aktuelle Verzögerung $a$ der Arbeitsmaschine und einer Umschaltzeit $t_s$ ermittelt. Die zwei Werte werden dann miteinander multipliziert.

In dem Schritt 103 wird dann verifiziert, dass die beschriebene Anpassung tatsächlich durchgeführt werden soll. Um das zu Prüfen wird der Druck an der Hydropumpe gemessen und die Fahrtrichtung erfasst. Aus diesen Informationen wird ein Wert $p_D$ ermittelt. Werte von $p_D$ größer als 0 beschreiben eine Situation, bei der die Arbeitsmaschine verzögert, auf Grund eines verzögernden Moments aus dem Antriebsstrang (negativer Leistungsfluss, Schubbetrieb).

Für den Fall, dass $p_D$ größer als 0 ist, wird die Anpassung des Schwellenwert in dem Schritt 104 durchgeführt. Der angepasste Schwellenwert wird mit dieser Formel berechnet:

$$v_s = v_{sa} + a * t_s$$

wobei $v_s$ der angepasste Schwellenwert ist, $v_{sa}$ der berechnete Schwellenwert von Schritt 101 ist, $a$ die aktuelle Verzögerung der Arbeitsmaschine ist und $t_s$ die Umschaltzeit ist.

Unabhängig von dem Fall, ob die Anpassung von Schritt 104 ausgeführt wurde oder nicht, wird in einem weiteren Schritt 105 die aktuelle Fahrgeschwindigkeit v der Arbeitsmaschine mit dem Schwellenwert $v_s$ verglichen. Für den Fall, dass die Fahrgeschwindigkeit kleiner als der Schwellenwert ist, wird ein Signal an die Kupplung 38 geschickt, um die Kupplung zu schließen.

Bezüglich Figur 3 wurde ein Verfahren beschrieben, bei der die Kupplung am Anfang offen ist und geschaut wird, ob die Bedingung, um die Kupplung zu schließen, ausgefüllt wurde. Es ist dem Fachmann klar, dass ein komplett analoges Verfahren angewendet werden kann, für den Fall, dass die Kupplung zu ist und geschaut werden muss, ob die Kupplung geöffnet werden muss. Daher, um Wiederholungen zu vermeiden, wird dieses zusätzliche Verfahren nicht im Detail beschrieben.

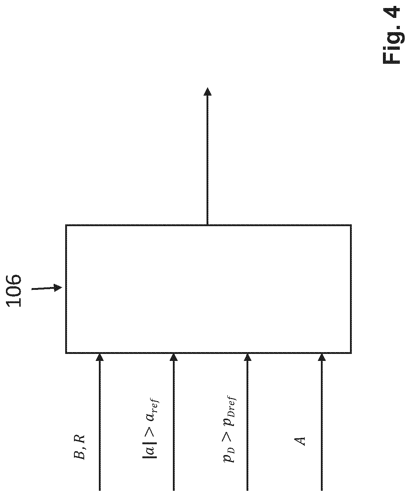

Figur 4 beschreibt eine Logik, die vorzugsweise benutzt werden kann, um beim Reversieren und beim Bremsen ein gewünschtes Verhalten des hydrostatischen Fahrantriebes 1 zu erreichen. Insbesondere beschreibt Figur 4 die Möglichkeit, den im Schritt 101 berechneten Schwellwert $v_{sa}$ indirekt anzupassen (durch die Änderung der Logik).

Es wird oft gewünscht, dass beim Bremsen genug Bremsmoment bereitgestellt wird, sodass der Fahrantrieb in weniger Zeit eine gewünschte Geschwindigkeit erreichen kann. Wie in dem Verlauf der Beschreibung klarer wird, wird durch die Logik von Figur 4 das gewünschte Verhalten erreicht.

Wie schon in dem Verlauf der Beschreibung erläutert wurde, ist im Normalfall die Kupplung bei höheren Geschwindigkeiten offen. Sobald der hydrostatische Antrieb abgebremst wird, wird die Hydropumpe und ggf. der Hydromotor 6 (im Fall eines schwenkbaren Hydromotors 6) mittels des Stromes $I_{HM2}$, der für die Steuerung des Schwenkwinkels des Hydromotors zuständig ist, so verstellt, dass der Hydromotor 6 als Hydropumpe arbeiten kann, sodass an den Abtrieb ein Bremsmoment bereitgestellt wird. Allerdings, da der Motor 6 in der Regel kleiner als der Hydromotor 8 ist, und da sehr oft das angeforderte Bremsmoment sehr hoch ist, wird das Bremsmoment des Hydromotors 6 nicht reichen, um das gewünschte Fahrverhalten zu ermöglichen. Wie schon in der Beschreibung erläutert wurde, wird in der Regel der Hydromotor 8 erst zugeschaltet, wenn die Fahrgeschwindigkeit unterhalb des Schwellenwertes ist. Daher kann es in so einem Fall vorteilhaft sein, wenn der Hydromotor 8 mittels der Kupplung 38 zugeschaltet wird auch bei höheren Geschwindigkeiten.

Die Logik von Figur 4 ermöglicht tatsächlich das Zuschalten des Hydromotors 8 auch bei höheren Geschwindigkeiten, um das gewünschte Fahrverhalten zu ermöglichen. Wie in der Figur dargestellt ist, werden in einem Schritt 106 mehrere Informationen erfasst und es wird geschaut, ob alle erfassten Informationen vorgegebene Bedingungen erfüllen. Für den Fall, dass alle Bedingungen erfüllt sind, wird dann das Zuschalten des Hydromotors 8 von der Steuereinheit 68 angefordert (durch den Strom $I_V$, der an die Kupplung gegeben wird). Es ist dem Fachmann klar, dass die erfassten Informationen, bzw. die Bedingungen, nur als Beispiel zu betrachten sind und es nicht notwendig ist, dass alle Informationen erfasst werden, bzw. alle Bedingungen erfüllt sind.

Die erste Information bezieht sich auf die Erfassung und auf die Überprüfung, ob sich der hydrostatische Fahrantrieb tatsächlich in einer Bremsbedingung B oder in einer Reversierbedingung R befindet.

Die zweite Information bezieht sich auf die Erfassung und auf die Überprüfung, ob die Verzögerung $a$ der Arbeitsmaschine oberhalb eines Grenzwertes $a_{ref}$ ist. Diese Information, bzw. diese Bedingung, ist wichtig, um zu überprüfen, ob tatsächlich die Unterstützung des Hydromotors 8 gebraucht wird oder nicht. Die Verzögerung $a$ kann entweder eine aktuelle Verzögerung oder eine gewünschte Verzögerung sein.

Die dritte Information ist der Wert $p_D$, der schon im Detail beschrieben wurde. Wie schon gesagt, ist der Wert $p_D$ proportional mit dem Deltadruck an der Hydropumpe und Werte von $p_D$ größer als 0 beschreiben eine Situation, bei der die Arbeitsmaschine verzögert. Die Bedingung für die Zuschaltung des Hydromotors 8 ist, dass der Wert $p_D$ größer als ein Grenzwert $p_{Dref}$ ist. Der Grund dafür ist, dass wenn sich ein zu hoher Druck bei der Hydropumpe bildet (da der Hydromotor 8 allein nicht in der Lage ist, das gewünschte Bremsmoment bereitzustellen), der Hydromotor 8 zugeschaltet werden soll. Alternativ kann eine Bremsleistung oder ein Bremsmoment erfasst werden und mit einem Grenzwert verglichen werden. Da sowohl der Wert $p_D$ als auch das Bremsmoment von der Bremsleistung abhängig sind, wird in den Ansprüchen von einer Bremsleistung gesprochen.

Die vierte Information ist eine Bedingung A, die geprüft werden soll. Diese Bedingung kann beliebig sein. Ein Beispiel davon ist, dass wenn die Fahrgeschwindigkeit zu hoch ist, empfehlenswert wäre den Hydromotor nicht zuzuschalten. Das bedeutet, dass für so ein Fall, die Zuschaltung des Hydromotors 8 vermieden wird, da die vorgegebene Bedingung (d.h. Fahrgeschwindigkeit innerhalb eines vorgegebenen Bereichs) nicht erfüllt ist. Alternativ kann die Bedingung A eine Temperatur sein. Der Grund dafür ist, dass bei zu hohen Temperaturen die Zuschaltung des Hydromotors vermieden werden soll.

Vorzugsweise, wenn alle die vier beschriebenen Bedingungen erfüllt sind, wird nach dem Schritt 106 ein Signal an die Kupplung durch den Strom $I_V$ vorgegeben, sodass die Kupplung 38 schließen wird.

Das beschriebene Verfahren ist in der Speichereinheit abgelegt und wird durch die Steuereinrichtung 68 ausgeführt.

Das beschriebene Verfahren kann in verschiedenen Arten von Arbeitsmaschinen benutzt werden. Im Wesentlichen kann das Verfahren bei allen Arbeitsmaschinen benutzt werden, die einen hydrostatischen Antrieb und eine ansteuerbare Antriebsmaschine (wie einen Dieselmotor) haben. Anwendungsbeispiele können z.B. ein Feldhäcksler, ein Mähdrescher, eine Schneefräse oder eine Straßenfräse sein.

Während die vorliegende Erfindung unter Bezugnahme auf die oben beschriebenen Ausführungsformen beschrieben wurde, ist es für den Fachmann klar, dass es möglich ist, verschiedene Modifikationen, Variationen und Verbesserungen der vorliegenden Erfindung im Lichte der oben beschriebenen Lehre und innerhalb des Bereichs der beigefügten Ansprüche zu realisieren, ohne von dem Schutzbereich der Erfindung abzuweichen.

Auch wenn die vorliegende Erfindung immer in Bezug auf zwei Hydromotoren beschrieben wurde, ist dem Fachmann klar, dass diese Erfindung durch kleine Anpassungen (z.B. Benutzung von zwei verschiedenen Skalierungsfunktionen bei zwei verschiedenen Hydromotoren) auch bei drei oder mehreren Hydromotoren angewendet werden kann.

Darüber hinaus wurden die Bereiche, auf denen Fachleute kundig sein dürften, hier nicht beschrieben, um die beschriebene Erfindung nicht unnötig zu verschleiern.

Dementsprechend soll die Erfindung nicht durch die spezifischen veranschaulichenden Ausführungsformen beschränkt sein, sondern nur durch den Schutzbereich der beigefügten Ansprüche.

**Patentansprüche**

1. Verfahren zur Ansteuerung eines hydrostatischen Fahrantriebes (1) einer mobilen Arbeitsmaschine, wobei der hydrostatische Fahrantrieb mit einer ersten Hydromaschine (4) mit verstellbarem Verdrängungsvolumen und mit einer zweiten Hydromaschine (6) und einer dritten Hydromaschine (6) versehen ist, wobei die erste Hydromaschine mit einer Antriebsmaschine koppelbar oder gekoppelt ist, wobei das von der ersten Hydromaschine kommende Druckmittel an die zweite und an die dritte Hydromaschine (6, 8), die parallel zueinander angeordnet sind, gefördert werden kann, wobei die zweite Hydromaschine (8) mit mindestens einen anzutreibenden Rad oder der anzutreibenden Kette oder Achse mittels einer Kupplung (38) drehverbindbar ist, wobei die dritte Hydromaschine (6) mit dem mindestens einen anzutreibenden Rad oder der anzutreibenden Kette oder Achse drehverbunden ist, wobei die Kupplung (38) unter Berücksichtigung einer Fahrgeschwindigkeit der mobilen Arbeitsmaschine, oder einer Größe, die von dieser abhängig ist, gesteuert wird,

**dadurch gekennzeichnet, dass** das Verfahren folgende Schritte umfasst:

a. Erfassen eines Fahrbefehls, der einer Soll-Fahrgeschwindigkeit oder einer Größe, die von dieser abhängig ist, entspricht;
b. Berechnung eines Schwellenwertes der Fahrgeschwindigkeit der Arbeitsmaschine, bei dem eine Umschaltung der Kupplung (38) stattfinden soll, wobei die Berechnung unter Berücksichtigung des im Schritt a. erfassten Fahrbefehls ausgeführt wird;
c. Wobei für den Fall, dass der Fahrbefehl einem Absolutwert der Soll-Fahrgeschwindigkeit der Arbeitsmaschine entspricht, der kleiner als ein vorgegebener Wert ist, der im Schritt b. berechnete Schwellenwert weiterhin unter Berücksichtigung einer aktuellen Verzögerung der Arbeitsmaschine und einer Umschaltzeit angepasst wird.

2. Verfahren nach Anspruch 1, wobei in dem Schritt c. der vorgegebene Wert kleiner als 5 km/h ist, noch mehr vorzugsweise kleiner als 3 km/h ist, noch mehr vorzugsweise kleiner als 1 km/h ist, noch mehr vorzugsweise kleiner als 0.5 km/h ist, noch mehr vorzugsweise gleich 0 km/h ist.

3. Verfahren nach einem der Ansprüche 1 bis 2, wobei in dem Schritt c. der angepasste Schwellenwert mit dieser Formel berechnet wird:

$$v_s = v_{sa} + a * t_s$$

wobei $v_s$ der angepasste Schwellenwert ist, $v_{se}$ der berechnete Schwellenwert von Schritt b ist, $a$ die aktuelle Verzögerung der Arbeitsmaschine ist und $t_s$ die Umschaltzeit ist.

4. Verfahren nach einem der Ansprüche 1 bis 3, wobei in dem Schritt b. die genannte Umschaltung eine Umschaltung von einem Status, in dem die Kupplung (38) geöffnet ist, zu einem Status, in dem die Kupplung (38) geschlossen ist, darstellt.

5. Verfahren nach einem der Ansprüche 1 bis 4, wobei in dem Schritt b die Berechnung auf Basis von einer Funktion, vorzugsweise einer Kennlinie, ausgeführt wird, die den Schwellenwert in Abhängigkeit des Fahrbefehls bestimmt.

6. Verfahren nach einem der Ansprüche 1 bis 5, wobei weiterhin ein Inchbefehl, vorzugsweise aus einem Inchpedal, erfasst wird, wobei der Inchbefehl mit dem im Schritt a. erfassten Fahrbefehl kombiniert wird, um einen angepassten Fahrbefehl zu ermitteln, wobei der korrigierte Fahrbefehl in dem Schritt b. benutzt wird, um den Schwellenwert zu berechnen.

7. Verfahren nach einem der Ansprüche 1 bis 6, wobei in dem Schritt a. der Fahrbefehl aus einer Eingabeeinrichtung, vorzugsweise aus einem Fahrpedal, erfasst wird.

8. Verfahren nach einem der Ansprüche 1 bis 7, wobei die Anpassung von Schritt c. nur ausgeführt wird, für den Fall, dass ein Verzögerungsstatus des Antriebs erfasst wurde.

9. Verfahren nach einem der Ansprüche 1 bis 8, wobei die zweite und/oder die dritte Hydromaschine mit jeweils verstellbaren Verdrängungsvolumen versehen ist.

10. Steuereinheit (68), welche eingerichtet ist, ein Verfahren nach einem der Ansprüche 1 bis 9 auszuführen.

11. Arbeitsmaschine, die einen hydrostatischen Fahrantrieb (1) umfasst, wobei der hydrostatische Fahrantrieb mit einer ersten Hydromaschine (4) mit verstellbarem Verdrängungsvolumen und mit einer zweiten Hydromaschine (8) und einer dritten Hydromaschine (6) versehen ist, wobei die erste Hydromaschine mit einer Antriebsmaschine koppelbar oder gekoppelt ist, wobei das von der ersten Hydromaschine kommende Druckmittel an die zweite und an die dritte Hydromaschine (6, 8), die parallel zueinander angeordnet sind, gefördert werden kann, wobei die zweite und die dritte Hydromaschine (6, 8) mit mindestens einem anzutreibenden Rad oder einer anzutreibenden Kette oder Achse verbindbar oder verbunden sind, wobei die Arbeitsmaschine eine Steuereinheit nach Anspruch 10 umfasst.

12. Computerprogramm, das dazu eingerichtet ist, das Verfahren nach einem der Ansprüche 1 bis 9 auszuführen und/oder zu steuern.

13. Maschinenlesbares Speichermedium mit einem darauf gespeicherten Computerprogramm nach Anspruch 12.

## Claims

1. Method for actuating a hydrostatic traction drive (1) of a mobile working machine, wherein the hydrostatic traction drive is provided with a first hydraulic machine (4) with an adjustable displacement volume and with a second hydraulic machine (6) and a third hydraulic machine (6), wherein the first hydraulic machine can be coupled or is coupled to a drive machine, wherein the pressure medium coming from the first hydraulic machine can be conveyed to the second and to the third hydraulic machine (6, 8), which are arranged parallel to each other, wherein the second hydraulic machine (8) can be rotationally connected by means of a clutch (38) to at least one wheel to be driven or the chain or axle to be driven, wherein the third hydraulic machine (6) is rotationally connected to the at least one wheel to be driven or the chain or axle to be driven, wherein the clutch (38) is controlled taking into account a speed of travel of the mobile working machine or a variable that is dependent on it,
**characterized in that** the method comprises the following steps:

   a. detecting a travel command, which corresponds to a target speed of travel or a variable that is dependent on it;
   b. calculating a threshold value for the speed of travel of the working machine at which the clutch (38) should switch over, wherein the calculation is performed taking into account the travel command detected in step a.;
   c. wherein, in the event that the travel command corresponds to an absolute value of the target speed of travel of the working machine that is lower than a specified value, the threshold value calculated in step b. is further adjusted taking into account a current deceleration of the working machine and a switchover time.

2. Method according to Claim 1, wherein, in step c., the specified value is less than 5 km/h, even more preferably less than 3 km/h, even more preferably less than 1 km/h, even more preferably less than 0.5 km/h, even more preferably is equal to 0 km/h.

3. Method according to either of Claims 1 and 2, wherein, in step c., the adapted threshold value is calculated using this formula:

$$v_s = v_{sa} + a * t_s$$

where $v_s$ is the adjusted threshold value, $v_{se}$ is the calculated threshold value of step b, a is the current deceleration of the working machine and $t_s$ is the switchover time.

4. Method according to any of Claims 1 to 3, wherein, in step b., the said switchover represents a switchover from a state in which the clutch (38) is open to a state in which the clutch (38) is closed.

5. Method according to any of Claims 1 to 4, wherein, in step b., the calculation is performed on the basis of a function, preferably a characteristic curve, which determines the threshold value as a function of the travel command.

6. Method according to any of Claims 1 to 5, wherein an inching command, preferably from an inching pedal, is also detected, wherein the inching command is combined with the travel command detected in step a. in order to determine an adjusted travel command, wherein the corrected travel command is used in step b. to calculate the threshold value.

7. Method according to any of Claims 1 to 6, wherein, in step a., the travel command is detected from an input device, preferably from an accelerator pedal.

8. Method according to any of Claims 1 to 7, wherein the adjustment of step c. is only performed in the event that a deceleration state of the drive has been detected.

9. Method according to any of Claims 1 to 8, wherein the second and/or the third hydraulic machine are/is provided with respectively adjustable displacement volumes.

10. Control unit (68), which is configured to execute a method according to any of Claims 1 to 9.

11. Working machine, which comprises a hydrostatic traction drive (1), wherein the hydrostatic traction drive is provided with a first hydraulic machine (4) with an adjustable displacement volume and with a second hydraulic machine (8) and a third hydraulic machine (6), wherein the first hydraulic machine can be coupled or is coupled to a drive machine, wherein the pressure medium coming from the first hydraulic machine can be conveyed to the second and to the third hydraulic machine (6, 8), which are arranged parallel to each other, wherein the second and the third hydraulic machine (6, 8) can be connected or are connected to at least one wheel to be driven or a chain or axle to be driven, wherein the working machine comprises a control unit according to Claim 10.

12. Computer program which is configured to execute and/or control the method according to any of Claims 1 to 9.

13. Machine-readable storage medium with a computer program according to Claim 12 stored thereon.

**Revendications**

1. Procédé pour commander un système d'entraînement hydrostatique (1) d'une machine de travail mobile, le système d'entraînement hydrostatique étant équipé d'une première machine hydraulique (4) à cylindrée variable et d'une deuxième machine hydraulique (6) et d'une troisième machine hydraulique (6), la première machine hydraulique étant apte à être reliée ou étant reliée à une machine motrice, le fluide sous pression provenant de la première machine hydraulique étant apte à être acheminé vers la deuxième et la troisième machine hydraulique (6, 8), qui sont agencées parallèlement l'une à l'autre, la deuxième machine hydraulique (8) étant apte à être reliée en rotation à au moins une roue à entraîner ou à la chaîne ou l'essieu à entraîner au moyen d'un embrayage (38), la troisième machine hydraulique (6) étant reliée en rotation à la roue ou à la chaîne ou à l'essieu à entraîner, l'embrayage (38) étant commandé en tenant compte d'une vitesse de déplacement de la machine de travail mobile ou d'une variable qui dépend de celle-ci,
   **caractérisé en ce que** le procédé comprend les étapes suivantes :

   a. détection d'une commande de déplacement qui correspond à une vitesse de déplacement de consigne ou à une variable qui dépend de celle-ci ;
   b. calcul d'une valeur seuil de la vitesse de déplacement de la machine de travail à laquelle une commutation de l'embrayage (38) doit avoir lieu, le calcul étant effectué en tenant compte de la commande de déplacement détectée à l'étape a. ;
   c. dans le cas où la commande de déplacement correspond à une valeur absolue de la vitesse de déplacement de consigne de la machine de travail qui est inférieure à une valeur prédéfinie, la valeur seuil calculée à l'étape b. est encore ajustée en tenant compte d'un ralentissement actuel de la machine de travail et d'un temps de commutation.

2. Procédé selon la revendication 1, dans lequel, à l'étape c., la valeur prédéfinie est inférieure à 5km/h, de préférence inférieure à 3km/h, de préférence inférieure à 1km/h, de préférence inférieure à 0,5km/h, de préférence égale à 0km/h.

3. Procédé selon l'une des revendications 1 à 2, dans lequel, à l'étape c., la valeur seuil réglée est calculée au moyen de la formule suivante :

$$v_s = v_{sa} + a * t_s$$

dans laquelle $v_s$ est la valeur seuil réglée, $v_{se}$ est la valeur seuil calculée à l'étape b., a est le ralentissement actuel de la machine de travail et $t_s$ est le temps de commutation.

4. Procédé selon l'une des revendications 1 à 3, dans lequel, à l'étape b, la commutation mentionnée représente une commutation d'un état dans lequel l'embrayage (38) est ouvert à un état dans lequel l'embrayage (38) est fermé.

5. Procédé selon l'une des revendications 1 à 4, dans lequel, à l'étape b, le calcul est effectué sur la base d'une fonction, de préférence d'une courbe caractéristique, qui détermine la valeur seuil en fonction de la commande de déplacement.

6. Procédé selon l'une des revendications 1 à 5, dans lequel une commande de déplacement lent, de préférence provenant d'une pédale de déplacement lent, est également détectée, la commande de déplacement lent étant combinée à la commande de déplacement détectée à l'étape a. afin de déterminer une commande de déplacement adaptée, la commande de déplacement corrigée étant utilisée à l'étape b. pour calculer la valeur seuil.

7. Procédé selon l'une des revendications 1 à 6, dans lequel, à l'étape a., la commande de déplacement est détectée à partir d'un dispositif d'entrée, de préférence à partir d'une pédale de déplacement.

8. Procédé selon l'une des revendications 1 à 7, dans lequel l'adaptation de l'étape c. n'est effectuée que dans le cas où un état de décélération du système d'entraînement a été détecté.

9. Procédé selon l'une des revendications 1 à 8, dans lequel la deuxième et/ou la troisième machine hydraulique sont pourvues chacune d'un volume de cylindrée réglable.

10. Unité de commande (68), qui est conçue pour mettre en œuvre un procédé selon l'une des revendications 1 à 9.

11. Machine de travail comprenant un système d'entraînement hydrostatique (1), le système d'entraînement hydrostatique étant équipé d'une première machine hydraulique (4) à volume de cylindrée variable et d'une deuxième machine hydraulique (8) et d'une troisième machine hydraulique (6), la première machine hydraulique étant apte à être reliée ou étant reliée à une machine d'entraînement, le fluide sous pression provenant de la première machine hydraulique aptes à être acheminé vers la deuxième et la troisième machine hydraulique (6, 8) qui sont agencées parallèlement l'une à l'autre, la deuxième et la troisième machine hydraulique (6, 8) étant aptes à être reliées ou étant reliées à au moins une roue, une chaîne ou un essieu à entraîner, la machine de travail comprenant une unité de commande selon la revendication 10.

12. Programme informatique conçu pour mettre en œuvre et/ou commander le procédé selon l'une des revendications 1 à 9.

13. Support de stockage lisible par machine sur lequel est enregistré un programme informatique selon la revendication 12.

Fig. 1

EP 4 428 394 B1

Fig. 2

Fig. 3

$B, R$

$|a| > a_{ref}$

$p_D > p_{Dref}$

$A$

106

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3009716 A